## Europäisches Patentamt
## European Patent Office
## Office européen des brevets

(19)

(11) Veröffentlichungsnummer: **0 097 785**

**A1**

(12) **EUROPÄISCHE PATENTANMELDUNG**

(21) Anmeldenummer: **83104008.4**

(22) Anmeldetag: **23.04.83**

(51) Int. Cl.³: **F 16 H 19/00**
**B 23 Q 5/38**

(30) Priorität: **24.06.82 DE 3223526**

(43) Veröffentlichungstag der Anmeldung:
**11.01.84 Patentblatt 84/2**

(84) Benannte Vertragsstaaten:
**AT BE CH FR GB IT LI LU NL SE**

(71) Anmelder: **IRS IROBOS Industrie Roboter Systeme GmbH**
**Tiroler Strasse 85**
**D-8962 Pfronten(DE)**

(72) Erfinder: **Roschiwal, Helmut**
**Ulrichsmahd 16**
**D-8900 Augsburg 21(DE)**

(74) Vertreter: **Liebau, Gerhard, Dipl.-Ing.**
**Birkenstrasse 39**
**D-8900 Augsburg 22(DE)**

(54) **Zahnriemenantrieb.**

(57) Ein Zahnriemenantrieb für translatorsich zu bewegende Maschinenteile (3), insbesondere für Schlitten von Werkzeugmaschinen od. dgl., weist einen parallel zur Bewegungsbahn (2a) des Maschinenteils (3) ruhend angeordneten, gespannten Zahnriemen (5) und eine am Maschinenteil (3) gelagerte, angetriebene Zahnscheibe (8) auf. An der Zahnseite (5') des Zahnriemens (5) sind mehrere Zahnstangenstücke (9) in Abstand (a) voneinander stationär angeordnet, deren Zähne (9a) den Zahnlücken (5c) des Zahnriemens (5) entsprechen und in diese eingreifen, solange das betreffende Teilstück des Zahnriemens (5) nicht durch die Zahnscheibe (8) von dem zugehörigen Zahnstangenstück (9) abgehoben ist.

Fig.1

EP 0 097 785 A1

**Zahnriemenantrieb.**

Die Erfindung betrifft einen Zahnriemenantrieb für translatorisch zu bewegende Maschinenteile, insbesondere für
Schlitten von Werkzeugmaschinen od. dgl., mit einem
parallel zur Bewegungsbahn des Maschinenteils ruhend
angeordneten, gespannten Zahnriemen und einer am Maschinteil gelagerten, angetriebenen Zahnscheibe mit zwei seitlich angeordneten Umlenkrollen, durch die der Zahnriemen
unter Bildung einer offenen Schlinge (Bucht) um die Zahnscheibe geführt ist.

Derartige Zahnriemenantriebe finden im Werkzeugmaschinenbau, bei Manipulatoren u. dgl. als Reversierantriebe
Anwendung. Obwohl diese Zahnriemenantriebe hervorragende
Eigenschaften aufweisen, ergeben sich bei Maschinen mit
längeren Bewegungsbahnen Positionierungenauigkeiten, die
sich insbesondere bei NC-gesteuerten Maschinen nachteilig
auswirken. Die Positionierungenauigkeiten sind auf eine
zu geringe Steifigkeit des Antriebsystems zurückzuführen
und letztere ist wiederum bedingt durch eine gewisse
Dehnbarkeit des Zahnriemens. Obwohl dieser eine Einlage
aus Stahlseilen aufweist, ist der Zahnriemen elastisch
dehnbar. Je größer nun die freie Länge (Dehnlänge) des
Zahnriemens zwischen seinem Befestigungspunkt an dem
ruhenden Maschinenteil und der Zahnscheibe an dem zu
bewegenden Maschinenteil ist, desto größere Positionierungenauigkeiten ergeben sich.

Der Erfindung liegt deshalb die Aufgabe zugrunde, einen
Zahnriemenantrieb für translatorisch zu bewegende Maschinenteile, insbesondere für Schlitten von Werkzeugmaschinen od. dgl. zu schaffen, bei dem Positionierungenauigkeiten, die sich aus der elastischen Dehnung
des Zahnriemens ergeben könnten, möglichst vermieden
werden.

Dies wird nach der Erfindung dadurch erreicht, daß an der Zahnseite des Zahnriemens mehrere Zahnstangenstücke in Abstand voneinander stationär angeordnet sind, deren Zähne den Zahnlücken des Zahnriemens entsprechen und in diese eingreifen, solange das betreffende Teilstück des Zahnriemens nicht durch die Zahnscheibe von dem zugehörigen Zahnstangenstück abgehoben ist.

Die Erfindung geht also von dem Gedanken aus, die freie Dehnlänge des Zahnriemens durch die stationär am ruhenden Maschinenteil angeordneten Zahnstangenstücke zu verkürzen. Der Zahnriemen wird durch die Zahnstangenstücke jeweils mit dem ruhenden Maschinenteil verbunden. Die freie Dehnlänge des Zahnriemens wird auf diese Weise verkürzt auf den Abstand zwischen der Zahnscheibe und der nächsten Zahnstange, die in den Zahnriemen eingreift. Hierdurch wird die Steifigkeit des Antriebsystems wesentlich gesteigert, und Ungenauigkeiten, die sich aus der elastischen Dehnbarkeit des Zahnriemens ergeben könnten, werden so weit reduziert, daß sie nicht mehr ins Gewicht fallen.

Weitere vorteilhafte Ausgestaltungen der Erfindung sind in den Unteransprüchen gekennzeichnet.

Die Erfindung ist in folgendem anhand eines in der Zeichnung dargestellten Ausführungsbeispieles näher erläutert. Es zeigen:

Figur 1 eine Seitenansicht des neuen Zahnriemenantriebes,

Figur 2 Einzelheiten desselben an der Stelle II der Figur 1.

Bei dem dargestellten Ausführungsbeispiel findet der Zahnriemenantrieb Anwendung zur Bewegung und Positionierung eines Manipulators 1. Auf einem Maschinenbett 2 ist ein Schlitten 3 in Richtung A verschiebbar geführt. Der Schlitten 3 trägt eine Säule 4 des Manipulators 1.

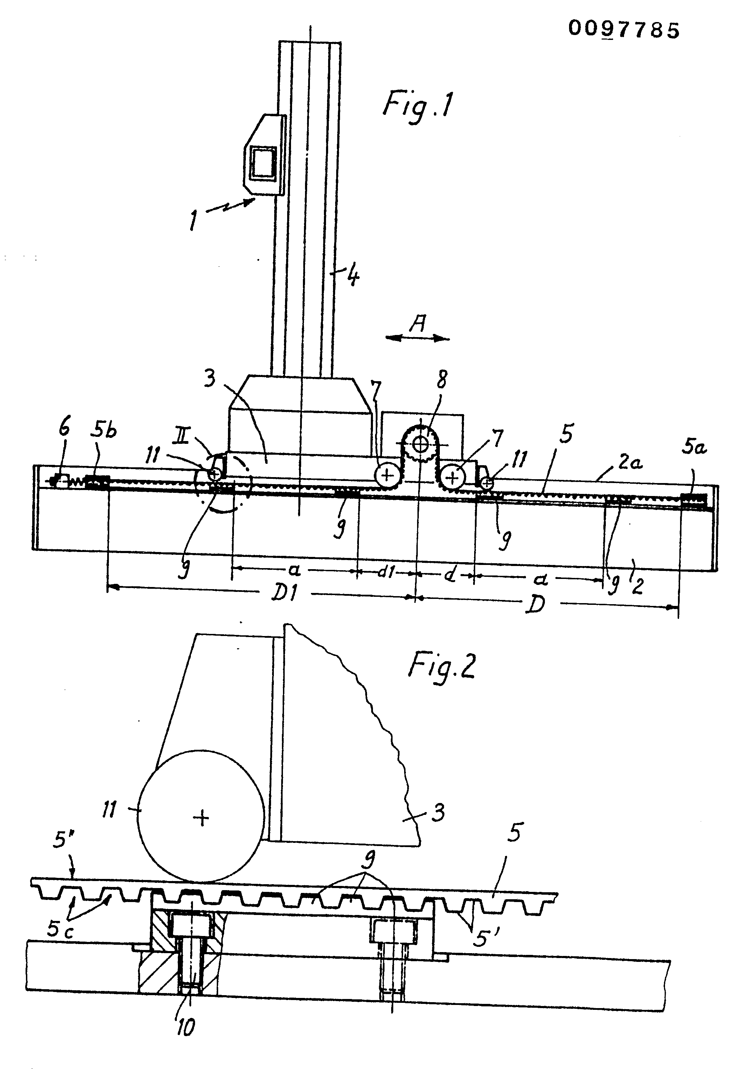

Parallel zur Bewegungsbahn 2a des Schlittens 3 ist ein Zahnriemen 5 ruhend angeordnet. Dieser Zahnriemen 5 ist mit seinem einen Ende 5a mit dem Maschinengestell direkt fest verbunden. Das andere Ende 5b ist über eine Spannvorrichtung 6, mittels welcher der Zahnriemen 5 gespannt werden kann, ebenfalls mit dem Maschinengestell 2 verbunden. An dem Schlitten 3 sind zwei Umlenkrollen 7 frei drehbar gelagert, zwischen denen eine antreibbare Zahnscheibe 8 gelagert ist. Durch die in Fig. 1 gezeigte Anordnung der Umlenkrollen 7 und der Zahnscheibe 8 wird der Zahnriemen 5 aus seiner parallel zur Bewegungsbahn 2a verlaufenden Normallage abgehoben und unter Bildung einer offenen Schlinge (Bucht) um die Zahnscheibe 8 geführt. Die bisher beschriebene Anordnung und Ausgestaltung des Zahnriemenantriebes ist vorbekannt.

Erfindungsgemäß sind nun an der Zahnseite 5' des Zahnriemens mehrere Zahnstangenstücke 9 in Abstand a voneinander stationär angeordnet. Jedes der Zahnstangenstücke 9 ist mittels der Schrauben 10 mit dem Maschinenbett 2 verbunden. Die Zähne 9a der Zahnstangenstücke 9 entsprechen den Zahnlücken 5c des Zahnriemens 5. In Normallage des Zahnriemens 5 greifen die Zähne 9a in die Zahnlücken 5c ein und verankern damit den Zahnriemen 5 in Längsrichtung fest mit dem Maschinenbett 2.

Würden die Zahnstangenstücke 9 nicht vorhanden sein, wie es bei dem vorbekannten Zahnriemenantrieb der Fall ist, dann würde sich eine verhältnismäßig große freie Dehnlänge D zwischen dem rechten Ende 5a des Zahnriemens, an welchem dieser mit dem Maschinenbett 2 verbunden ist, und der Zahnscheibe 8 ergeben. Eine entsprechend große freie Dehnlänge D1 würde sich zwischen dem anderen Ende 5b des Zahnriemens und der Zahnscheibe 8 ergeben. Die freie Dehnlänge D bzw. D1 ist selbstverständlich abhängig von der jeweiligen Stellung des Schlittens 3.

Durch die erfindungsgemäß vorgesehenen Zahnstangenstücke 9 wird jedoch der Zahnriemen 8 im Bereich jedes Zahnstangenstuckes zugfest mit dem Maschinengestell 2 verbunden.
Hierdurch wird die freie Dehnlänge d bzw. d1 auf die Abstände zwischen der Zahnscheibe 8 und den jeweils benachbarten Zahnstangenstücken begrenzt. Bei Verschiebung
des Schlittens 3 wird der Zahnriemen 5 durch die Zahnscheibe 8 jeweils nur von einem Zahnstangenstück abgehoben, sobald dieses Zahnstangenstück in den Bereich
unterhalb der Zahnscheibe 8 gelangt. Der Zahnriemen 5 ist
jedoch dann weiterhin an den beiden benachbarten Zahnstangenstücken festgelegt. Die freie Dehnlänge d bzw.
d1 kann niemals größer werden als der gegenseitige Abstand a der Zahnstangenstücke zuzüglich des Teilstückes
des Zahnriemens, welches sich jeweils zwischen einer der
Umlenkrollen 7 und der Zahnscheibe 8 befindet.

Der gegenseitige Abstand a der Zahnstangenstücke 9 ist
abhängig von der Positioniergenauigkeit des Lageregelkreises und der elastischen Dehnbarkeit des Zahnriemens.
Der Abstand a ist so zu wählen, daß die maximale Dehnung,
die sich auf einer Länge a des Zahnriemens zuzüglich des
Abstandes von einer Umlenkrolle 7 zur Antriebsscheibe 8
ergeben könnte, kleiner ist als die Positioniergenauigkeit des jeweils verwendeten Lageregelkreises.

An die Genauigkeit der Zahnstangenstücke brauchen keine
besonderen Ansprüche gestellt zu werden, denn die Zahnstangenstücke dienen lediglich zu einer formschlüssigen
Verbindung zwischen Zahnriemen 5 und Maschinenbett 2.
Die Zahnstangenstücke brauchen nicht gehärtet zu werden
und können gegebenenfalls auch aus Kunststoff gespritzt
sein. Ihre Montage kann in einfacher Weise dadurch erfolgen, daß man zunächst den Zahnriemen 5 an seinem einen
Ende 5a mit dem Maschinenbett verbindet und das andere
Ende 5b durch die Spannvorrichtung 6 spannt. Die Schrauben
10, mit welchen die Zahnstangenstücke 9 mit dem Maschinenbett 2 verbunden werden, sind hierbei noch gelöst. Hierdurch können sich die Zahnstangenstücke in Längsrichtung

des Zahnriemens zusammen mit diesem verschieben. Wenn der Zahnriemen in genügender Weise gespannt ist, werden auch die Schrauben 10 angezogen und hierdurch die Zahnstangenstücke 9 paßgenau mit dem Maschinenbett 2 verbunden.

Damit sich der Zahnriemen 5 unter Zugbelastung nicht aus dem Zahnstangenstück 9 abhebt, kann es gegebenenfalls erforderlich sein, an dem zu bewegenden Maschinenteil 3 Andrückelemente, vorzugsweise in Form von frei drehbar gelagerten Rollen 11, vorzusehen, welche auf die der Zahnseite 5' abgewandten Rückseite 5" des Zahnriemens einwirken und diesen gegen das jeweilige Zahnstangenstück andrücken. Bei dem gezeigten Ausführungsbeispiel sind nur zwei derartige Andrückrollen 11 vorgesehen, es können jedoch auch mehrere sein, oder anstelle der Rollen könnten auch Gleitstücke vorgesehen sein.

Patentansprüche

1. Zahnriemenantrieb für translatorisch zu bewegende Maschinenteile , insbesondere für Schlitten von Werkzeugmaschinen od. dgl., mit einem parallel zur Bewegungsbahn des Maschinenteils ruhend angeordneten, gespannten Zahnriemen und einer am Maschinenteil gelagerten, angetriebenen Zahnscheibe mit zwei seitlich angeordneten Umlenkrollen, durch die der Zahnriemen unter Bildung einer offenen Schlinge (Bucht) um die Zahnscheibe geführt ist, dadurch gekennzeichnet, daß an der Zahnseite (5') des Zahnriemens (5) mehrere Zahnstangenstücke (9) in Abstand (a) voneinander stationär angeordnet sind, deren Zähne (9a) den Zahnlücken (5c) des Zahnriemens (5) entsprechen und in diese eingreifen, solange das betreffende Teilstück des Zahnriemens (5) nicht durch die Zahnscheibe (8) von dem zugehörigen Zahnstangenstück (9) abgehoben ist.

2. Antrieb nach Anspruch 1, dadurch gekennzeichnet, daß an dem zu bewegenden Maschinenteil (3) Andrückelemente (11) vorgesehen sind, welche auf die der Zahnseite (5') abgewandten Rückseite (5") des Zahnriemens (5) einwirken und diesen gegen das jeweilige Zahnstangenstück (9) andrücken.

3. Antrieb nach Anspruch 2, dadurch gekennzeichnet, daß die Andrückelemente frei drehbar gelagerte Rollen (11) sind.

*Fig.1*

*Fig.2*

Europäisches
Patentamt

EUROPÄISCHER RECHERCHENBERICHT

0097785
Nummer der Anmeldung

EP 83 10 4008

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | DE-A-3 016 313  (VEB) <br> * Seiten 4,5; Figuren * | 1 | F 16 H  19/00 <br> B 23 Q   5/38 |
| Y | FR-A-2 451 517  (HAMUL) <br> * Seiten 8,9; Figuren 7,8 * | 1,2 | |
| A | US-A-3 850 043  (TARBOX) | 1 | |
| A | DE-A-2 729 019  (WAHLI) | 1 | |

RECHERCHIERTE
SACHGEBIETE (Int. Cl. ³)

F 16 H  19/00
B 23 Q   5/00
B 23 Q  11/00

Der vorliegende Recherchenbericht wurde für alle Patentansprüche erstellt.

| Recherchenort <br> DEN HAAG | Abschlußdatum der Recherche <br> 08-09-1983 | Prüfer <br> FLORES E. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82